# EUROPÄISCHE PATENTANMELDUNG

(11) **EP 1 186 757 A2**
(43) Veröffentlichungstag der Anmeldung: **13.03.2002**
(21) Anmeldenummer: 01119991.6
(22) Anmeldetag: 18.08.2001
(51) Int. Cl.: F01N 3/04, F01N 3/20, F01N 3/28

(54) **Abgasreinigungsanlage einer Brennkraftmaschine mit einer Kühleinheit**

(30) Priorität: 05.09.2000 DE 10043621
(71) Anmelder: DaimlerChrysler AG, 70567 Stuttgart (DE)
(72) Erfinder: Huss, Roland, 73733 Esslingen (DE); Karwath, Joachim, 71336 Waiblingen (DE); Schön, Christof, Dr., 73630 Remshalden (DE)

(57) **Zusammenfassung**

Die Erfindung betrifft eine Abgasreinigungsanlage einer Brennkraftmaschine mit einem Katalysator, mindestens einem Stickoxidspeicher-Katalysator, und einer Abgaskühleinheit zur Regelung der Temperatur des den Stickoxidspeicher-Katalysator durchströmenden Abgasstromes. Um dabei einen optimalen Betrieb des Katalysators weiterhin zu gewährleisten, erfolgt die Anordnung der Abgaskühleinheit zwischen dem Katalysator und dem Stickoxidspeicher-Katalysator, wodurch bei Vollastbetrieb Temperaturspitzen im Abgas vermieden werden, die zur Zerstörung des Stickoxidspeicher-Katalysators führen können

## Beschreibung

Die Erfindung betrifft eine Abgasreinigungsanlage für eine Brennkraftmaschine mit einem Katalysator, mindestens einem Stickoxidspeicher-Katalysator, mindestens einem Abgastemperatursensor und einer Abgaskühleinheit zur Regelung der Temperatur des den Stickoxidspeicher-Katalysator durchströmenden Abgases, wobei die Abgaskühleinheit zwischen dem Katalysator und dem Stickoxidspeicher-Katalysator angeordnet ist.

Aus der DE 19703295A1 ist ein Verfahren und eine Vorrichtung zur Regelung der Abgastemperatur in einer Abgasanlage bekannt. Bei diesem Verfahren wird die Temperatur der Stickoxidfalle bestimmt und über eine Einrichtung die Abgastemperatur in einem dem optimalen Wirkungsgrad der Stickoxidfalle entsprechenden Temperaturbereich verändert. Die dabei verwendete Kühlvorrichtung zur Temperaturregelung ist vor der Katalysatoranordnung vorgesehen, welche einen Dreiwegekatalysator und eine Stickoxidfalle aufweist. Dabei erfolgt die Regelung der Abgastemperatur derart, dass eine Beschädigung der Stickoxidfalle vermieden wird.

Da die oben erwähnte Vorrichtung die Abgastemperatur des Abgases verändert, welches auch den Dreiwegekatalysator durchströmt, wird die Konvertierungsrate des Dreiwegekatalysators wesentlich von der eingestellten Temperatur abhängen. Es ist bekannt, dass hohe Umsetzungsraten bei einem Dreiwegekatalysator erst bei Temperaturen zwischen 330°C und 800°C erreicht werden können. Deshalb kann eine Regelung der Abgastemperatur in einem dem optimalen Wirkungsgrad der Stickoxidfalle entsprechenden Temperaturbereich den Wirkungsgrad des Dreiwegekatalysators negativ beeinflussen, da der optimale Wirkungsgrad einer Stickoxidfalle in einem Temperaturbereich von etwa 250°C bis 450°C erzielt wird.

Der Erfindung liegt die Aufgabe zugrunde, eine Abgasreinigungsanlage einer Brennkraftmaschine bereit zu stellen, bei der ein Betrieb der Abgasreinigungsanlage mit einem optimalen Wirkungsgrad der Stickoxidfalle und des Katalysators erzielt wird, wobei bei dem Betrieb der Abgasreinigungsanlage ein dauerhafter Temperaturschutz für den Stickoxidspeicher-Katalysator auch bei hohen auftretenden Abgastemperaturen im Vollastbetrieb der Brennkraftmaschine gewährleistet ist.

Zur Lösung der Aufgabe dienen erfindungsgemäß die im Kennzeichen des Patentanspruchs 1 angegebenen Merkmale.

Durch die besondere Anordnung einer Kühleinrichtung zwischen dem Katalysator und dem Stickoxidspeicher-Katalysator werden Temperaturspitzen insbesondere bei Vollastbetrieb im Abgas vermieden, die eine Zerstörung des Stickoxidspeicher-Katalysators zur Folge haben könnten, wobei ein optimaler Betrieb des Katalysators weiterhin ermöglicht wird.

Die erfindungsgemäße Anordnung der Abgaskühleinheit hinter einem Dreiwegekatalysator gewährleistet eine Reduzierung der Abgastemperaturen auf ein Niveau, welches vom Austritt aus der Abgaskühleinheit bis zum Eintritt des Abgases in den Stickoxidspeicher-Katalysator ungefähr konstant bleibt. Ist die Abgaskühleinheit vor dem Dreiwegekatalysator positioniert, dann wird die Abgastemperatur zuerst gesenkt, dann aber nach Durchströmen des Dreiwegekatalysators aufgrund der exothermen Reaktionen im Dreiwegekatalysator wiederum ansteigen, und somit vor dem Eintritt in den Stickoxidspeicher-Katalysator wieder ein höheres Temperaturniveau erreichen. In diesem Fall bleibt die Gefahr einer Beschädigung der Stickoxidspeicher-Katalysator vorhanden.

Somit ergibt sich bei der erfindungsgemäßen Anordnung der Abgaskühleinheit der Vorteil einer besseren motornahen Plazierung der Abgasreinigungsanlage ohne Überhitzungsgefahr.

Erfindungsgemäß wird eine Kühleinrichtung in der Abgasleitung zwischen dem Dreiwegekatalysator und Stickoxidspeicher-Katalysator angeordnet. Die Kühleinrichtung enthält eine steuerbare Abgasklappe, eine Hauptabgasleitung und eine Bypassleitung. Die Bypassleitung weist längere Abgaswege als die Hauptabgasleitung, wodurch in der Bypassleitung größere Wärmeverluste des Abgases auftreten. Die Abgasklappe wird in Abhängigkeit von verschiedenen Parametern angesteuert, wobei die Ansteuerung pneumatisch, hydraulisch oder elektrisch erfolgen kann.

Es ist vorgesehen, dass die Abgasklappe an der Abzweigungsstelle der Bypassleitung so angeordnet ist, dass sie in der Lage ist, die Hauptabgasleitung oder die Bypassleitung komplett zu verschließen, wobei eine Zwischenstellung zur Umleitung eines bestimmten Anteils des Abgasmassenstromes in die Bypassleitung einstellbar ist.

Bei einer weiteren Ausgestaltung ist die Abgasklappe derart in der Bypassleitung angeordnet, dass die Hauptabgasleitung immer offen bleibt. In diesem Fall wird der Durchmesser der Hauptabgasleitung so dimensioniert, dass bei der Regelung der Abgastemperatur eine Beschädigung der Stickoxidfalle vermieden wird.

Eine vorteilhafte Weiterbildung der Erfindung wird durch die besondere Positionierung eines in der Bypassleitung angeordneten Kühlers in Form eines Wärmeaustauscher. Das Abgas wird dabei durch die Bypassleitung in den Kühler geleitet, der mit einem Kühlmittel betrieben wird. Dabei kann der Durchfluß des Kühlmittels in Abhängigkeit der Betriebsparameter durch die Motorsteuerung geregelt werden. Als Kühlmittel kann dabei das Motorkühlwasser oder durch einen Ventilator geförderte Luft dienen. Bei einer geeigneten Ausführung des Wärmetauschers kann beispielsweise auch der Fahrtwind zur direkten Kühlung dienen.

Der Gegenstand der Erfindung ist in der Zeichnung dargestellt und wird im folgenden anhand eines Ausführungsbeispiels näher erläutert. Es zeigen:
- Fig.1: eine Abgasreinigungsanlage mit erfindungsgemäßem Katalysator, einem Stickoxidspeicher-Katalysator, einem Temperatursensor und einer Kühleinrichtung.
- Fig.2: die Abgasreinigungsanlage von Fig. 1 mit einer zweiten Ausführungsform der erfindungsgemäßen Kühleinrichtung.
- Fig.3: die Abgasreinigungsanlage von Fig. 1 mit einer anderen Kühleinrichtung.

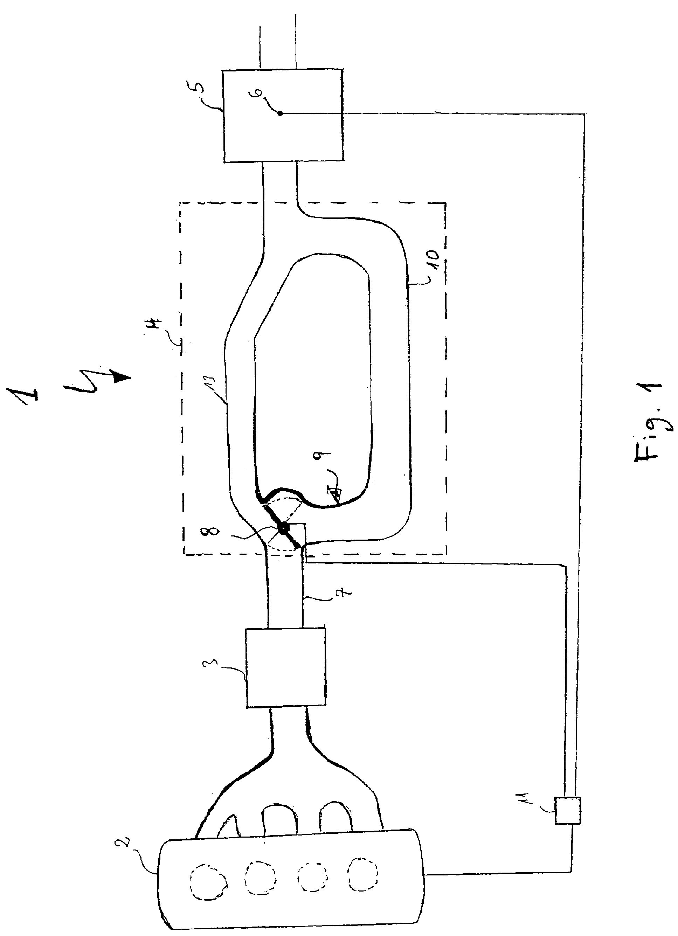

Eine Abgasreinigungsanlage 1 für eine Brennkraftmaschine 2 besteht gemäß Fig.1 aus einem Dreiwegekatalysator 3, einer Kühleinrichtung 4, einem Stickoxidspeicher-Katalysator 5 und einem Temperatursensor 6. Dabei ist die Kühleinrichtung 4 nach dem Dreiwegekatalysator 3 und vor dem Stickoxidspeicher-Katalysator 5 angeordnet.

Durch diese Anordnung wird das Abgas mit höherer Temperatur an den Dreiwegekatalysator 3 beim Kaltstart der Brennkraftmaschine 2 direkt herangeführt. Der Dreiwegekatalysator 3 wird rasch erwärmt und hält seine Arbeitstemperatur während des gesamten Betriebs.

Die Kühleinrichtung 4 ist in einer Abgasleitung 7 angebracht, die zwischen dem Dreiwegekatalysator 3 und dem Stickoxidspeicher-Katalysator 5 angeordnet ist. Die in Fig. 1 gezeigte Kühleinrichtung 4 enthält eine dreh- und steuerbar gelagerte Abgasklappe 8. Dabei weist die Kühleinrichtung 4 eine Hauptabgasleitung 13 und eine Bypassleitung 9 mit unterschiedlichen Abgaswegen auf, wobei in der Bypassleitung 9 größere Wärmeverluste des Abgases als in der kürzeren Hauptabgasleitung 13 auftreten.

Die Abgasklappe 8 ist erfindungsgemäß an der Abzweigungsstelle der Bypassleitung so angeordnet, dass sie in der Lage ist, die Hauptabgasleitung 13 oder die Bypassleitung 9 komplett zu verschließen, wobei Zwischenstellungen zur Umleitung eines bestimmten Anteils des Abgasmassenstromes in die Bypassleitung 9 einstellbar ist.

Die Abgasklappe 8 wird abgastemperaturabhängig so angesteuert, dass bei Auftreten von hohen Abgastemperaturen der gesamte Abgasstrom durch die Bypassleitung 9 abgeleitet wird, wobei Zwischenstellungen auch möglich sind. Die Ansteuerung kann beispielsweise pneumatisch erfolgen.

Die Bypassleitung 9 ist mit einer verlängerten Abgasleitung 10 derart ausgebildet, dass eine entsprechende Kühlung des durchströmenden Abgases infolge des Wärmeverlustes erfolgen kann. Zweckmäßig ist auch, die Kühlwirkung durch eine Vergrößerung der wärmeabgebenden Oberfläche zur Intensivierung der Wärmestrahlung bzw. der Konvektion mittels einer Verrippung der Bypassleitung 9 zu verstärken. Die Kühlleistung in der Bypassleitung 9 soll so bemessen werden, dass auch unter extremen Bedingungen wie hohe Außentemperatur und hohe Motorbelastung die maximal zulässige Stickoxidspeicher-Katalysatortemperatur nicht überschritten wird.

Bei höheren Lasten und Drehzahlen wird die Abgasklappe 8 geöffnet und der Weg für das Abgas über die Bypassleitung 9 freigegeben. Der Leitungsabschnitt 10 hat dabei die Funktion eines Wärmeaustauschers zur Reduzierung der Abgastemperatur.

An dem Stickoxidspeicher-Katalysator 5 ist ein Temperatursensor 6 angeordnet, der die Temperatur des Stickoxidspeicher-Katalysators mißt und an die Motorsteuerung 11 weiterleitet, wobei die Motorsteuerung 11 anhand eines Temperaturmodells den Temperaturverlauf im gesamten NOx-Speicher 5 berechnet. Ausgehend von diesem Wert wird der Abgasstrom über die Stellung der Abgasklappe 8 derart gesteuert, dass die maximal zulässige Temperatur am NOx-Speicher 5 nicht überschritten wird. Dabei werden der Abgasmassenstrom, die Wärmekapazitäten und Wärmeübergangskoeffizienten der Komponenten der Kühleinheit, die Umgebungslufttemperatur, die Fahrgeschwindigkeit und der Betriebszustand des Motors berücksichtigt.

Die in der Kühleinheit 4 plazierte Abgasklappe 8 kann von der Motorsteuerung 11 so angesteuert werden, dass das Abgas die Bypassleitung 9 durchströmt und dabei eine Abgastemperatur erreicht, welche den optimalen Betrieb des Stickoxidspeicher-Katalysators 5 gewährleistet. Zur Steuerungszwecken ist es vorteilhaft, weitere Temperatursensoren beispielsweise durch die Plazierung solcher Sensoren vor und nach der Abgaskühleinheit anzuordnen, wobei solche Temperatursensoren an anderen geeigneten Stellen in der Abgasreinigungsanlage 1 angebracht sein können.

Erfindungsgemäß leitet die durch die Motorsteuerung 11 angesteuerte Abgasklappe 8 das aus dem Dreiwegekatalysator kommende Abgas in die Bypassleitung 9 um, so dass der nachgeschaltete Stickoxidspeicher-Katalysator 5 bei hohen Abgastemperaturen unbeschädigt bleibt.

Damit der Stickoxidspeicher-Katalysator 5 in einem Temperaturbereich mit optimalem Wirkungsgrad betrieben wird, regelt die Motorsteuerung 11 die Öffnungsstellung der Abgasklappe 8 derart, dass die Temperatur der in den Stickoxidspeicher-Katalysator 5 einströmenden Abgase ungefähr im entsprechenden Temperaturbereich liegt. Zweckmäßig ist die Verwendung zwei hintereinander angeordneter Stickoxidspeicher-Katalysatoren, um den Wirkungsgrad einer solchen Abgasreinigungsanlage 1 bei allen Betriebspunkten zu gewährleisten.

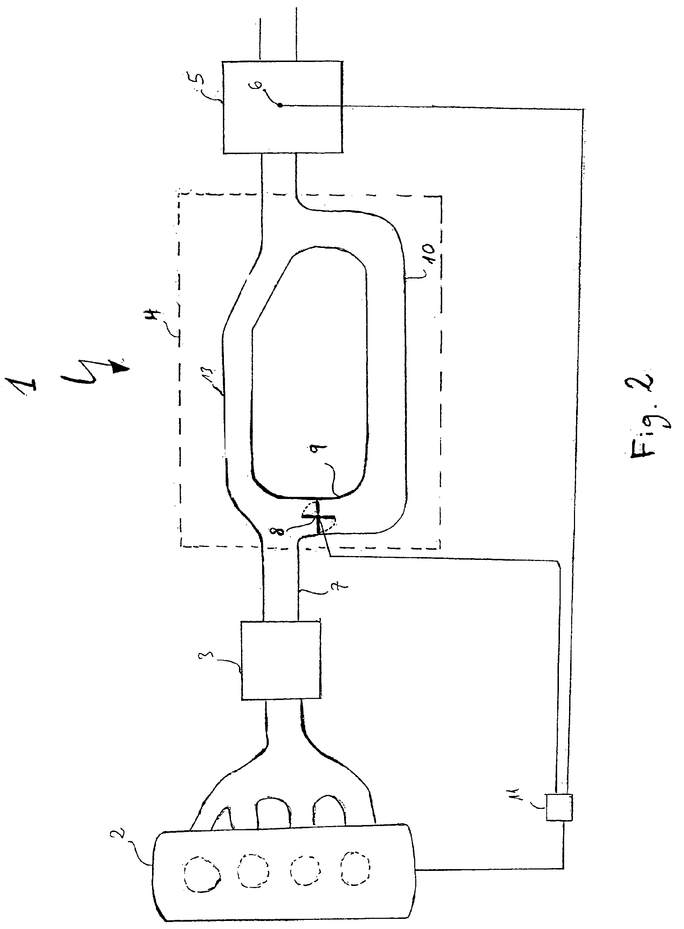

Fig.2 zeigt eine weitere Ausgestaltung der erfindungsgemäßen Kühleinrichtung 4, in der die Abgasklappe in der Bypassleitung 9 angeordnet ist, so dass die Hauptabgasleitung 13 immer offen bleibt. In diesem Fall wird der Durchmesser der Hauptabgasleitung 13 so dimensioniert, dass bei der Regelung der Abgastemperatur eine Beschädigung der Stickoxidfalle 5 vermieden wird.

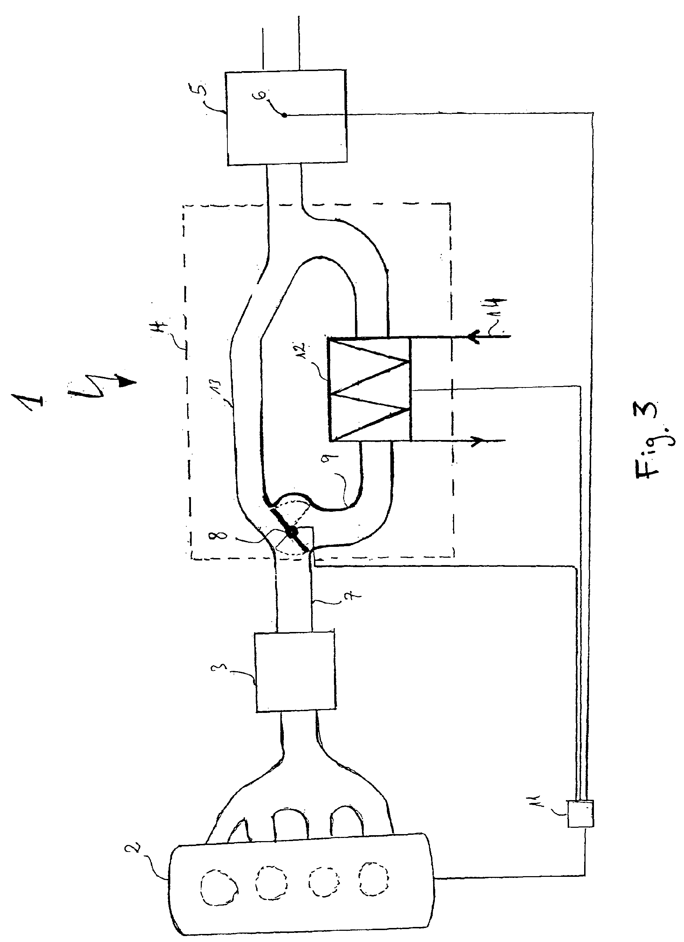

Gemäß Fig.3 ist ein Kühler 12 in der Bypassleitung 9 angeordnet, der die Funktion der verlängerten Abgasleitung 10 ersetzen soll. Er ist so ausgebildet, dass er von einem Kühlmittel 14 zur Reduzierung der Abgastemperatur durchströmt wird, das die Abgaswärme abführt. Das Motorkühlwasser kann als solches Kühlmittel 14 dienen, wobei Luft auch als solches dienen kann. In diesem Fall wird die aus dem Abgas zu entziehende Wärme durch die Motorsteuerung 11 berechnet, um das Abgas auf die gewünschte Temperatur zu kühlen. Dabei wird der Kühlmitteldurchfluß dementsprechend eingestellt.

Des Weiteren ist es zweckmäßig eine erste Abgasklappe in der Hauptabgasleitung 13 und eine zweite Abgasklappe in der Bypassleitung 9 anzuordnen, wobei beide gleichzeitig durch die Motorsteuerung 11 angesteuert werden können. Dabei werden die Abgasmassenströme in der Hauptabgasleitung 13 und in der Bypassleitung 9 so eingestellt, dass der nachgeschaltete Stickoxidspeicher-Katalysator 5 bei hohen Abgastemperaturen unbeschädigt bleibt.

## Patentansprüche

1. Abgasreinigungsanlage (1) einer Brennkraftmaschine (2) mit einem Katalysator (3), mindestens einem Stickoxidspeicher-Katalysator (5), einem Abgastemperatursensor (6) und einer Abgaskühleinheit (4) zur Regelung der Temperatur des den Stickoxidspeicher-Katalysator (5) durchströmenden Abgasstromes,
**dadurch gekennzeichnet,**
**dass** die Abgaskühleinheit (4) zwischen dem Katalysator (3) und dem Stickoxidspeicher-Katalysator (5) angeordnet ist.

2. Abgasreinigungsanlage nach Anspruch 1,
**dadurch gekennzeichnet,**
**dass** die Abgaskühleinheit (4) mindestens eine Abgasklappe (8) und eine Bypassleitung (9) aufweist.

3. Abgasreinigungsanlage nach Anspruch 1 oder 2,
**dadurch gekennzeichnet,**
**dass** die Abgasklappe (8) der Abgaskühleinheit (4) steuerbar ist.

4. Abgasreinigungsanlage nach Anspruch 1 oder 2,
**dadurch gekennzeichnet,**
**dass** die Abgasklappe (8) in der Abzweigungsstelle der Bypassleitung (9) der Abgaskühleinheit angeordnet ist.

5. Abgasreinigungsanlage nach Anspruch 1 oder 2,
**dadurch gekennzeichnet,**
**dass** die Abgasklappe (8) in der Bypassleitung (9) der Abgaskühleinheit angeordnet ist.

6. Abgasreinigungsanlage nach einem der vorhergehenden Ansprüche,
**dadurch gekennzeichnet,**
**dass** die Stellung der Abgasklappe (8) der Abgaskühleinheit (4) von einer Motorsteuerung betriebpunktsabhängig angesteuert wird.

7. Abgasreinigungsanlage nach einem der vorhergehenden Ansprüche,
**dadurch gekennzeichnet,**
**dass** Kühlrippen an der Bypassleitung (9) angeordnet sind.

8. Abgasreinigungsanlage nach einem der vorhergehenden Ansprüche,
**dadurch gekennzeichnet,**
**dass** die Abgaskühleinheit (4) innerhalb der Bypassleitung (9) einen Kühler (12) aufweist.
